# EUROPEAN PATENT APPLICATION

(11) **EP 4 804 602 A1**
(43) Date of publication of application: **09.09.2026**
(21) Application number: 24896749.9
(22) Date of filing: 29.11.2024
(51) Int. Cl.: H04W 24/08

(54) **MEASUREMENT METHOD, APPARATUS, TERMINAL, NETWORK DEVICE, AND STORAGE MEDIUM**

(30) Priority: 30.11.2023 CN 202311630481
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100053 (CN)
(74) Representative: Patentgruppen A/S
(86) International application number: PCT/CN2024/135792
(87) International publication number: WO 2025/113669

(57) **Abstract**

Embodiments of the present disclosure disclose measurement methods, measurement apparatuses, terminals, network devices, and storage media. The measurement method includes: when a collision occurs between a Pre-MG and a first MG, performing at least one of following operations: applying a dropping rule; performing measurement within the first MG; dropping the first MG.

## Description

### CROSS-REFERENCE TO RELATED APPLICATION

This application claims a priority of the Chinese patent application No. 202311630481.X filed on November 30, 2023, which is incorporated herein by reference in its entirety.

### TECHNICAL FIELD

The present disclosure relates to the field of communication technology, in particular to measurement methods, measurement apparatuses, terminals, network devices, and storage media.

### BACKGROUND

In the related art, a network device may configure multiple concurrent measurement gaps (MGs) for a User Equipment (UE), where the multiple concurrent MGs may include a pre-configured measurement gap (Pre-MG). The Pre-MG takes effect after being activated by the UE, and time domain overlaps may exist between the measurement gaps. In a case where the multiple concurrent MGs include the Pre-MG, if a Pre-MG having a time domain overlap is in an activation or deactivation procedure, the UE may be unable to determine the MG finally used.

### SUMMARY

To solve the technical problems in the related art, embodiments of the present disclosure provide measurement methods, measurement apparatuses, terminals, network devices, and storage media.

Technical solutions of the embodiments of the present disclosure are implemented as follows.

An embodiment of the present disclosure provides a measurement method, applied to a UE, the method including:
when a collision occurs between a Pre-MG and a first MG, performing at least one of following operations:
applying a dropping rule;
performing measurement within the first MG;
dropping the first MG.

In the above solution, the collision between the Pre-MG and the first MG includes a collision between a state transition of the Pre-MG and the first MG.

In the above solution, the state transition of the Pre-MG is Pre-MG activation and/or deactivation.

In the above solution, the state transition of the Pre-MG collides with the first MG, when at least one of following conditions is satisfied:
the state transition of the Pre-MG occurs within a first time period before the starting point of the first MG;
the state transition of the Pre-MG occurs within a second time period after the ending point of the first MG;
the state transition of the Pre-MG occurs within the first MG;
a distance between the state transition of the Pre-MG and the first MG is less than or equal to 4 milliseconds (ms);
the ending point of the state transition of the Pre-MG occurs within a first time period starting 4 ms before the starting point of the first MG, and ending 4 ms after the ending point of the first MG.

In the above solution, the performing measurement within the first MG includes:
performing measurement within the first MG in a first time range; wherein the first time range includes at least one of:
a first time period before the starting point of the first MG;
a second time period after the ending point of the first MG;
within the first MG.

In the above solution, the applying the dropping rule includes:
applying the dropping rule after the first MG or after the first MG plus a third time period.

In the above solution, a state of the Pre-MG takes effect after the first MG plus the third time period.

In the above solution, an activation time and/or a deactivation time of is a fourth time period.

In the above solution, the method further includes:
when the Pre-MG collides with the first MG, delaying the state transition of the Pre-MG; or,
when a time distance between a to-be-activated Pre-MG and the first MG is less than or equal to 5 ms, dropping a Pre-MG, wherein the dropped Pre-MG is a first Pre-MG after an activation procedure of the Pre-MG.

In the above solution, the method further includes:
obtaining first information, wherein the first information includes at least one of:
second information, used for indicating the UE to delay the state transition procedure of the Pre-MG until after the first MG;
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

In the above solution, the method further includes performing at least one of following operations:
after a measurement gap length (MGL) of the first MG, performing the state transition on the Pre-MG;
when a priority of the Pre-MG is higher than a priority of the first MG, dropping the first MG;
when the priority of the Pre-MG is lower than the priority of the first MG, performing the state transition on the Pre-MG after the MGL of the first MG;
when the priority of the Pre-MG is lower than the priority of the first MG, performing measurement within the first MG;
when the priority of the Pre-MG is higher than the priority of the first MG, performing the state transition of the Pre-MG.

In the above solution, the performing the state transition on the Pre-MG after the MGL of the first MG includes:
at a fifth time point, performing the Pre-MG activation or deactivation; wherein
the fifth time point represents the ending point of the MGL of the first MG, or a time point obtained from the MGL of the first MG plus a sixth time period.

In the above solution, the method further includes:
sending fifth information to a network device, wherein the fifth information is used for indicating at least one of:
whether the UE supports delaying the state transition procedure of the Pre-MG until after the first MG, when the Pre-MG collides with the first MG;
whether the UE supports delaying the state transition procedure of the Pre-MG until after the first MG, when the priority of the Pre-MG is lower than the priority of the first MG;
whether the UE supports dropping the first MG having a priority lower than that of the Pre-MG;
whether the UE supports the collision between the state transition of the Pre-MG and the first MG.

In the above solution, the Pre-MG collides with the first MG, when at least one of following conditions is satisfied:
the Pre-MG partially overlaps with the first MG in time domain;
the Pre-MG fully overlaps with the first MG in time domain;
a distance between the Pre-MG and the first MG is less than or equal to 4 ms.

In the above solution, the distance between the Pre-MG and the first MG includes one of:
a time difference between the ending point of the Pre-MG and the ending point of the first MG;
a time difference between the ending point of the Pre-MG and the starting point of the first MG;
a time difference between the starting point of the Pre-MG and the ending point of the first MG; or,
a time difference between the starting point of the Pre-MG and the starting point of the first MG.

In the above solution, the method further includes:
dropping the first MG, when at least one of following conditions is satisfied:
Pre-MG deactivation collides with the first MG;
the priority of the Pre-MG is higher.

In the above solution, the method further includes:
performing measurement within the first MG, when at least one of following conditions is satisfied:
Pre-MG activation collides with the first MG;
the priority of the Pre-MG is lower;
the priority of the Pre-MG is higher.

In the above solution, the method further includes:
performing measurement within the first MG, and the Pre-MG activation is delayed until a first time point, wherein the first time point is 5 ms after the ending point of the first MG.

An embodiment of the present disclosure further provides a measurement method, applied to a network device, the method including:
sending first information to a UE, wherein the first information includes at least one of:
second information, used for indicating the UE to delay a state transition procedure of a Pre-MG until after a first MG;
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

In the above solution, before the sending first information to the UE, the method further includes:
receiving fifth information sent by the UE, wherein the fifth information is used for indicating at least one of:
whether the UE supports delaying the state transition procedure of the Pre-MG until after the first MG, when the Pre-MG collides with the first MG;
whether the UE supports delaying the state transition procedure of the Pre-MG until after the first MG, when the priority of the Pre-MG is lower than the priority of the first MG;
whether the UE supports dropping the first MG having a priority lower than that of the Pre-MG;
whether the UE supports the collision between the state transition of the Pre-MG and the first MG.

An embodiment of the present disclosure further provides a measurement apparatus, including:
a first processing unit, configured to, when a collision occurs between a Pre-MG and a first MG, perform at least one of following operations:
applying a dropping rule;
performing measurement within the first MG;
dropping the first MG.

An embodiment of the present disclosure further provides another measurement apparatus, including:
a first sending unit, configured to send first information to a UE, wherein the first information includes at least one of:
second information, used for indicating the UE to delay a state transition procedure of a Pre-MG until after a first MG;
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

An embodiment of the present disclosure further provides a UE, including a first processor and a first communication interface, wherein:
the first communication interface is configured to, when a collision occurs between a Pre-MG and a first MG, perform at least one of following operations:
applying a dropping rule;
performing measurement within the first MG;
dropping the first MG.

An embodiment of the present disclosure further provides a network device, including a second processor and a second communication interface, wherein:
the second communication interface is configured to send first information to a UE, wherein the first information includes at least one of:
second information, used for indicating the UE to delay a state transition procedure of a Pre-MG until after a first MG;
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

An embodiment of the present disclosure further provides a UE, including a first processor and a first memory for storing a computer program capable of running on the first processor; wherein the first processor is configured to, when running the computer program, execute steps of any one of the methods at the UE side described above.

An embodiment of the present disclosure further provides a network device, including a second processor and a second memory for storing a computer program capable of running on the second processor, wherein the second processor is configured to, when running the computer program, execute steps of any one of the methods at the network device side described above.

An embodiment of the present disclosure further provides a storage medium, having a computer program stored thereon, wherein when the computer program is executed by a processor, steps of any one of the methods at the UE side described above are implemented, or steps of any one of the methods at the network device side described above are implemented.

In the measurement method, apparatus, UE, network device, and storage medium provided by the embodiments of the present disclosure, the network device sends first information to the UE, where the first information includes at least one of: second information, third information, or fourth information. Specifically, the second information is used for indicating the UE to delay the state transition procedure of the Pre-MG until after the first MG; the third information is used for indicating the UE to determine, based on priorities of MGs, whether to delay the state transition procedure of the Pre-MG until after the first MG; and the fourth information is used for indicating the UE to determine, based on priorities of MGs, whether to drop the Pre-MG. When a collision occurs between the Pre-MG and the first MG, the UE performs at least one of following operations: applying a dropping rule, performing measurement within the first MG, dropping the first MG. The above solution clarifies the operation(s) performed by the UE when the Pre-MG collides with the first MG, such that the UE can determine the MG finally used.

### BRIEF DESCRIPTION OF THE DRAWINGS

FIG. 1 is a schematic flowchart of a measurement method according to an embodiment of the present disclosure;
FIG. 2 is a schematic diagram of state transition of a Pre-MG according to an embodiment of the present disclosure;
FIG. 3 is another schematic diagram of state transition of a Pre-MG according to an embodiment of the present disclosure;
FIG. 4 is a schematic diagram of delaying activation or deactivation of a Pre-MG according to an embodiment of the present disclosure;
FIG. 5 is another schematic diagram of delaying activation or deactivation of a Pre-MG according to an embodiment of the present disclosure;
FIG. 6 is a schematic flowchart of a measurement method according to an embodiment of the present disclosure;
FIG. 7 is a schematic structural diagram of a measurement apparatus according to an embodiment of the present disclosure;
FIG. 8 is another schematic structural diagram of a measurement apparatus according to an embodiment of the present disclosure;
FIG. 9 is a schematic structural diagram of a UE according to an embodiment of the present disclosure; and
FIG. 10 is a schematic structural diagram of a network device according to an embodiment of the present disclosure.

### DETAILED DESCRIPTION

Multiple concurrent MGs may be understood as configuring multiple sets of measurement gaps through Radio Resource Control (RRC). Due to limited processing capability of a UE, when multiple configured sets of measurement gaps overlap in the time domain, a network device indicates priorities of the measurement gaps. For example, the network device indicates that a priority of measurement gap pattern_i is k, a priority of measurement gap pattern_j is h, and so on. When measurement gaps overlap in the time domain, a measurement gap finally used can be determined by comparing the priorities corresponding to the measurement gaps. For example, a measurement gap having a higher priority is used, and a measurement gap having a lower priority is dropped. Multiple sets of measurement gaps overlapping in the time domain include two cases: an actual overlap in the time domain; and no overlap in the time domain but a distance between the two is less than a certain value.

A Pre-MG refers to a measurement gap configured by a network device through RRC but not yet effective, which needs to be activated; activation represents that the measurement gap takes effect and can be used by the UE. Correspondingly, the Pre-MG may also be deactivated. Activation or deactivation of the Pre-MG may be indicated by the network device, or may be autonomously determined by the UE based on a specific event. Since relevant information needs to be loaded, it takes a certain time for the UE to perform activation or deactivation of the Pre-MG, which is usually 5 ms, which means the Pre-MG activation procedure or deactivation procedure usually take 5ms. During this time period, a state of the Pre-MG is ambiguous, and it cannot be determined whether the measurement gap is in an activated state or a deactivated state.

In a case where multiple concurrent MGs and a Pre-MG are used in combination, i.e., the multiple concurrent MGs include a Pre-MG. If a Pre-MG having a time domain overlap is in an activation/deactivation procedure, the UE cannot handle the time domain overlap problem. Specifically, when another MG overlaps with a Pre-MG in the time domain, or when two Pre-MGs overlap in the time domain, if a Pre-MG is in an activation/deactivation procedure, priority information cannot be applied (priorities are applied to effective/activated MGs), then the UE cannot determine which measurement gap to retain or which measurement gap to drop based on a measurement gap priority method.

Based on this, in various embodiments of the present disclosure, a network device sends first information to a UE, wherein the first information includes at least one of: second information, third information, or fourth information. Specifically, the second information is used for indicating the UE to delay a state transition procedure of a Pre-MG until after a first MG; the third information is used for indicating the UE to determine, based on priorities of MGs, whether to delay the state transition procedure of the Pre-MG until after the first MG; and the fourth information is used for indicating the UE to determine, based on priorities of MGs, whether to drop the Pre-MG. When a collision occurs between the Pre-MG and the first MG, the UE performs at least one of following operations: applying a dropping rule; performing measurement within the first MG; dropping the first MG. The above solution clarifies operation(s) performed by the UE when the Pre-MG collides with the first MG, such that the UE can determine the measurement gap finally used.

The present disclosure is further described in detail below with reference to drawings and embodiments.

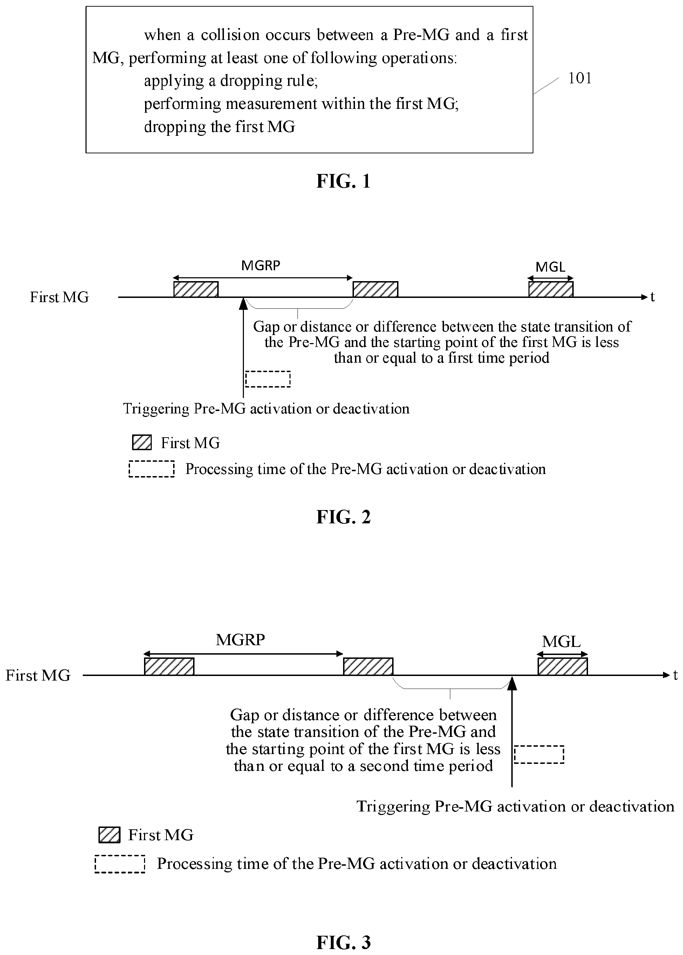

An embodiment of the present disclosure provides a measurement method, applied to a UE, also referred to as User Equipment (UE), as shown in FIG. 1, the method including:
Step 101: when a collision occurs between a Pre-MG and a first MG, performing at least one of following operations: applying a dropping rule; performing measurement within the first MG; dropping the first MG.

Here, the improvement achieved by the solution lies in that: when the Pre-MG collides with the first MG (e.g., among concurrent MGs, one is a Pre-MG and the other is a first MG), if the Pre-MG is in a procedure of state transition, the state of the Pre-MG is ambiguous during this time period (i.e., it cannot be determined whether the Pre-MG has been activated or deactivated), resulting in an inability to determine a collision state between the two (the Pre-MG and the first MG) or which one of the two can be used. In this embodiment, when the Pre-MG collides with the first MG, the above three operations are provided to enable the UE to determine the measurement gap finally used, and the three operations correspond to three schemes, which may be used independently or in any possible combination.

Applying the dropping rule may be understood as: even if the Pre-MG is in the procedure of state transition, regardless of whether the state of the Pre-MG has been determined (whether it has been activated or deactivated), how to make a choice is determined according to a priority rule. That is, between the Pre-MG and the first MG, a high-priority measurement gap is retained and a low-priority measurement gap is dropped. The above rule may be referred to as "dropping rule". Specifically, the dropping rule includes: dropping a low-priority measurement gap, and/or retaining a high-priority measurement gap. The pre-configured measurement gap may be abbreviated as Pre-MG.

Performing measurement during the first MG may be understood as: continuing to use the first MG during this time period regardless of the state of the Pre-MG, and a processing time for the state transition of the Pre-MG is delayed. Since the Pre-MG is in the procedure of state transition, it cannot be judged whether the Pre-MG has been activated or deactivated (activation may be understood as that the Pre-MG can be used by the UE, and if the Pre-MG overlaps with the first MG, then a collision occurs between the two; deactivation may be understood as that the Pre-MG cannot be used by the UE, which can be understood as that the Pre-MG does not exist, and thus no collision with the first MG occurs). Therefore, applying the dropping rule is not a preferred scheme, and thus this scheme is to preferentially continue using the first MG for measurement. That is, performing measurement within the first MG represents using the first MG. Specifically, a Pre-MG colliding with the first MG may be dropped, or the state transition procedure of the Pre-MG may be delayed until after the first MG. Specifically, application scenarios include a scenario when a collision occurs between the first MG and a Pre-MG activation procedure. At this time, measurement is performed during the first MG, and the Pre-MG activation procedure is delayed. Further, in the above application scenario, the priority of the Pre-MG is higher (i.e., the priority of the Pre-MG is higher than the priority of the first MG).

Dropping the first MG may also be described as performing measurement during the Pre-MG. Alternatively, dropping the first MG may be understood as dropping the first MG when a collision occurs between the first MG and Pre-MG activation/deactivation procedure. And the UE performs relevant processing for the Pre-MG, such as activation/deactivation. That is, dropping the first MG represents performing measurement within a Pre-MG that collides with the first MG. Specifically, application scenarios include a scenario when a collision occurs between the first MG and Pre-MG deactivation procedure. At this time, the first MG is dropped, and measurement is performed within the Pre-MG. Further, in the above application scenario, the priority of the Pre-MG is higher (i.e., the priority of the Pre-MG is higher than the priority of the first MG).

The first MG includes at least one of: a Pre-MG, a Multi-Universal Subscriber Identity Module (MUSIM) gap, a network controlled small gap (NCSG), or a type 2 measurement gap (i.e., a measurement gap without priority). Herein, the MUSIM gap may also be described as MUSIM gap or MUSIM gap(s), or may also be described as a MUSIM measurement gap, i.e., MUSIM measurement gap(s). The first MG may also be described as a measurement gap or described as a gap. A main scenario is that among concurrent measurement gaps, there is a Pre-MG, and a certain Pre-MG collides with another measurement gap among the concurrent measurement gaps. The first MG is used to refer to the other measurement gap among the concurrent measurement gaps.

It should be noted that both the Pre-MG and the first MG are measurement gaps, and measurement gap is abbreviated as MG. The measurement gap is a concept in the time domain, including a measurement gap repetition period (MGRP), a measurement gap length (MGL), and an offset. Within the MGL of a measurement gap, the UE disconnects from a current serving frequency and tunes its frequency to a target reference symbol position for measurement; i.e., the current serving cell cannot schedule the UE, resulting in throughput loss. A Pre-MG refers to a measurement gap configured by a network side (e.g., a network device) through RRC but not yet effective, which needs to be activated. Activation represents that the measurement gap takes effect and can be used by the UE. Correspondingly, the Pre-MG may also be deactivated. Activation or deactivation of the Pre-MG may be indicated by the network side (e.g., a network device), or may be autonomously determined by the UE based on a specific event.

It should be noted that collision may also be described as overlap, and may also be described as time domain overlap, or described as conflict. That is, the Pre-MG colliding with the first MG may also be understood as the Pre-MG overlapping with the first MG, or a time domain overlap or conflict existing. The time domain overlap between measurement gaps includes two cases: an actual overlap in the time domain; and no overlap in the time domain but a gap in the time domain is less than a certain value or a certain range. The gap in the time domain may also be described as a time domain interval.

Considering that the Pre-MG takes effect only after being activated, and an effective Pre-MG becomes invalid after being deactivated, the Pre-MG involves state transition. Based on this, in an embodiment, the collision between the Pre-MG and the first MG includes a collision between a state transition of the Pre-MG and the first MG.

Here, the collision between the state transition of the Pre-MG and the first MG may be understood as the state transition of the Pre-MG occurring within the first MG, or may be understood as: a time domain interval between a trigger time of the state transition of the Pre-MG and a starting moment or an ending moment of the first MG is less than a certain value or a certain range.

In an embodiment, the state transition of the Pre-MG includes activation and/or deactivation of the Pre-MG.

Here, the state transition of the Pre-MG is activation and/or deactivation of the Pre-MG. Specifically, the state transition of the Pre-MG may be that: after the Pre-MG is configured for the UE by the network side (e.g., a network device), the network side may indicate the UE to perform activation through indication information, or the UE determines to perform activation when a specific condition is satisfied (e.g., there is a measurement object requiring a measurement gap); a measurement object may also be described as a frequency point or a measurement frequency point. The state transition of the Pre-MG may also be that: for an activated Pre-MG, the network side indicates the UE to perform deactivation through indication information, or the UE determines to perform deactivation when a specific condition is satisfied (e.g., there is no measurement object requiring a measurement gap). State transition may also be described as state transformation or state change.

It should be noted that the state change of the Pre-MG colliding with the first MG includes an activation procedure of the Pre-MG colliding with the first MG, or a deactivation procedure of the Pre-MG colliding with the first MG.

On the basis that the collision between the Pre-MG and the first MG includes the collision between the state transition of the Pre-MG and the first MG, in order to accurately determine whether a collision occurs between the Pre-MG and the first MG. In an embodiment, the state transition of the Pre-MG collides with the first MG, when at least one of following conditions is satisfied: the state transition of the Pre-MG occurs within a first time period before the starting point of the first MG; the state transition of the Pre-MG occurs within a second time period after the ending point of the first MG; the state transition of the Pre-MG occurs within the first MG; a distance between the state transition of the Pre-MG and the first MG is less than or equal to 4 milliseconds (ms); or the ending point of the state transition of the Pre-MG occurs within a first time period starting 4 ms before the starting point of the first MG, and ending 4 ms after the ending point of the first MG.

Here, values of the first time period and the second time period may be the same or different. The values of the first time period and the second time period are related to the processing capability of the UE. Different UEs may use different first and second time periods. Since the UE needs to process relevant parameters/configurations, and such processing takes time, a state of the Pre-MG is ambiguous during this time period, i.e., it cannot be determined whether the Pre-MG has been activated or deactivated, resulting in an inability to determine whether a collision occurs between the Pre-MG and the first MG or which one of the two can be used. Therefore, even if the state transition of the Pre-MG does not occur within the MGL of the first MG, if a time domain interval between the state transition of the Pre-MG and the first MG is less than a certain range, it is considered that the Pre-MG collides with the first MG. The first time period may be described as a first duration, and the second time period may be described as a second duration. The values of the first time period and the second time period may be in milliseconds, such as 4 ms.

The state transition of the Pre-MG occurring within a first time period before the starting point of the first MG may also be described as: an interval, distance, or difference between the state transition of the Pre-MG and a starting position (i.e., a starting point) of the first MG is less than or equal to the first time period, as specifically shown in FIG. 2. The interval, distance, or difference is a parameter in a time domain.

The state transition of the Pre-MG occurring within a second time period after the ending point of the first MG may also be described as: an interval, distance, or difference between the state transition of the Pre-MG and an ending position (i.e., an ending point) of the first MG is less than or equal to the second time period, as specifically shown in FIG. 3.

It should be noted that the first MG here may also be described as a certain first MG position(s) or a certain first MG occasion(s). Here, an occasion may be described as instance or occasion. The first MG appears periodically, and each appearance may be called a measurement gap instance or a measurement gap occasion. Since the first MG appears periodically while the state transition of the Pre-MG is sporadic (it can be understood that the state transition procedure occurs within a specific period of time, and the Pre-MG also appears periodically after being activated), a collision occurs between the state change of the Pre-MG and a certain first MG position(s)/occasion(s).

The distance between the state transition of the Pre-MG and the first MG being less than or equal to 4 ms may be understood as: an interval, distance, or difference between the state transition of the Pre-MG and the first MG is less than or equal to 4 ms.

The ending point of the state transition of the Pre-MG occurring within a first time period may be understood as: an ending moment of the state transition of the Pre-MG occurs within the first time period. The starting point of the first time period being 4 ms before the starting point of the first MG may be understood as: an interval between the starting point of the first time period and the starting point of the first MG is 4 ms, and the starting point of the first time period is before the starting point of the first MG; a starting point may also be described as a starting moment. The ending point of the first time period being 4 ms after the ending point of the first MG may be understood as: an interval between the ending point of the first time period and the ending point of the first MG is 4 ms, and the ending point of the first time period is after the ending point of the first MG; an ending point may also be described as an ending moment. The ending point of the state transition of the Pre-MG occurs within a first time period, wherein the starting point of the first time period is 4 ms before the starting point of the first MG, and the ending point of the first time period is 4 ms after the ending point of the first MG, which may also be described as that the ending point of the Pre-MG activation/deactivation procedure occurs within the first time period, wherein the starting point of the first time period is 4 ms before the starting point of a gap occasion, and the ending point of the first time period is 4 ms after the ending point of the gap occasion.

In an embodiment, the performing measurement within the first MG includes: performing measurement within the first MG in a first time range; wherein the first time range includes at least one of: a first time period before the starting point of the first MG; a second time period after the ending point of the first MG; or within the first MG.

Here, when the state transition of the Pre-MG collides (i.e., overlaps in time domain) with the first MG, the state transition procedure of the Pre-MG requires processing time. Due to limited processing capability of the UE, the UE cannot simultaneously perform both measurement within the first MG and the state transition of the Pre-MG. A solution provided by the embodiment of the present disclosure is: in the first time range, performing measurement within the first MG based on the first MG, and a state change of the Pre-MG is delayed until after the first MG or after the first MG plus a certain time period. That is, the state transition of the Pre-MG is delayed until after the first MG or after the first MG plus a certain time period (e.g., a third time period mentioned below). The first time range includes at least one of: a first time period before the starting point of the first MG, and/or, a second time period after the ending point of the first MG, and/or, within the first MG.

Further, after the state transition of the Pre-MG is completed, since both the Pre-MG and the first MG appear periodically, subsequent collisions between the Pre-MG and the first MG are handled through a dropping rule; i.e., after the first MG or after the first MG plus a third time period, the UE applies the dropping rule.

After the state transition of the Pre-MG is completed, in an embodiment, the applying the dropping rule includes: applying the dropping rule after the first MG or after the first MG plus a third time period. Here, the third time period may be described as a third duration. In an embodiment, a state of the Pre-MG takes effect after the first MG plus the third time period. Here, in a case where the state transition of the Pre-MG collides (i.e., overlaps in time domain) with the first MG, the state transition procedure of the Pre-MG requires processing time. Due to limited processing capability of the UE, the UE cannot simultaneously perform both measurement within the first MG and the state transition of the Pre-MG. Therefore, the state transition of the Pre-MG is delayed, and the state of the Pre-MG takes effect after the first MG plus the third time period. In this way, the Pre-MG whose state transition is delayed does not collide with the first MG any longer. The state of the Pre-MG includes an activated state and/or a deactivated state.

In an embodiment, an activation time and/or a deactivation time of the Pre-MG is a fourth time period. Here, the activation time and/or deactivation time of the Pre-MG is a fourth time period; the fourth time period may be a single duration, or may be expressed as: processing time + fourth time period; the processing time may be 5 ms. The fourth time period is in milliseconds, e.g., the fourth time period may be 7 ms, or described as 5 ms + 2 ms. The fourth time period may be 5 ms (depending on UE processing capability, and some UEs may not require additional processing time at all). The activation time and/or deactivation time of the Pre-MG may also be described as an activation delay and/or a deactivation delay of the Pre-MG. That is to say, the activation time of the Pre-MG may also be described as the activation delay of the Pre-MG; and the deactivation time of the Pre-MG may also be described as the deactivation delay of the Pre-MG. The fourth time period may be described as a fourth duration.

When the fourth time period is represented as: processing time + fourth time period, it is because the activation time or the deactivation time of the Pre-MG includes the processing time of the state transition of the Pre-MG by the UE, such as a processing time from activation to deactivation, a processing time from deactivation to activation, and the like. If there is only one pre-configured processing time, then a value of the fourth time period is equal to 0 ms. On the other hand, if there are two Pre-MGs in the first MG, and the collision between the Pre-MG and the first MG includes an overlap between the Pre-MGs, then the 5 ms processing time is insufficient and more time is required (for example, the fourth time period is 2 ms), the fourth time period may be used to determine a relationship between these two Pre-MGs, so as to determine whether an overlap exists between the two.

In order to solve the collision between the state transition of the Pre-MG and the first MG to determine a measurement gap currently used, in an embodiment, the method further includes: when the Pre-MG collides with the first MG, delaying the state transition of the Pre-MG; or, when a time distance between a to-be-activated Pre-MG and the first MG is less than or equal to 5 ms, dropping a Pre-MG, wherein the dropped Pre-MG is a first Pre-MG immediately after an activation procedure of the Pre-MG.

Here, when the Pre-MG collides with the first MG, the state transition procedure of the Pre-MG may be delayed until after the first MG.

The activation time of a Pre-MG is usually 5 ms. If a time distance between a to-be-activated Pre-MG and the first MG is less than or equal to 5 ms, the UE cannot complete the activation procedure before the due time, thus affecting subsequent periodic Pre-MGs, primarily a first subsequent Pre-MG. To standardize UE behavior, it may be specified that the behavior of the UE is to drop the Pre-MG; that is, when the time distance between the to-be-activated Pre-MG and the first MG is less than or equal to 5 ms, the UE drops a first Pre-MG after the activation procedure of the Pre-MG. For example, a starting point of an activation procedure of the to-be-activated Pre-MG is T0 and an ending point is T1. When the Pre-MG is successfully activated within a time period T0-T1, the Pre-MG takes effect at a time point T2 after T1. That is, Pre-MGs appear periodically from the moment T2, i.e., a first Pre-MG appears at T2, a second Pre-MG appears at T2+C, a third Pre-MG appears at T2+2C, and so on. However, if the activation procedure T0-T1 overlaps with a first time interval T3-T4 (a starting point of a first MG is T3 and an ending point is T4), e.g., a time interval between the two is less than or equal to 5 ms, it implies that the activation procedure of the to-be-activated Pre-MG collides with the first MG. In this case, the activation procedure cannot be executed as scheduled during T0-T1, but is delayed for a period of time after the first time interval (i.e., after T4). Since the activation procedure is delayed, the Pre-MG might not have been activated at the moment T2. Therefore, it is equivalent to dropping the first Pre-MG that should have occurred at the moment T2. Within a slot of the dropped Pre-MG, the UE may send at least one of a Physical Uplink Control Channel (PUCCH), a Physical Uplink Shared Channel (PUSCH), or a Sounding Reference Signal (SRS), or receive at least one of: a Physical Downlink Control Channel (PDCCH), a Physical Downlink Shared Channel (PDSCH), a Timing Reference Signal (TRS), or a Channel State Information-Reference Signal (CSI-RS).

In order to facilitate the UE to determine a solution or a processing mode for the MG collision, in an embodiment, the method further includes: obtaining first information, wherein the first information includes at least one of: second information, used for indicating the UE to delay the state transition procedure of the Pre-MG until after the first MG; third information, used for indicating the UE to determine, based on priorities of MGs, whether to delay the state transition procedure of the Pre-MG until after the first MG; fourth information, used for indicating the UE to determine, based on priorities of MGs, whether to drop the Pre-MG.

Here, the UE may obtain the first information from a network device, i.e., from a network side, or may obtain first information pre-defined in a protocol.

Based on obtaining the first information, if the Pre-MG collides with the first MG, the UE determines which mode to use to solve the MG collision problem based on the first information. Based on this, in an embodiment, the method further includes performing at least one of following operations: after a measurement gap length (MGL) of the first MG, performing the state transition on the Pre-MG; when a priority of the Pre-MG is higher than a priority of the first MG, dropping the first MG; when the priority of the Pre-MG is lower than the priority of the first MG, performing the state transition on the Pre-MG after the MGL of the first MG; when the priority of the Pre-MG is lower than the priority of the first MG, performing measurement within the first MG; or when the priority of the Pre-MG is higher than the priority of the first MG, performing the state transition of the Pre-MG.

Here, in a case where the Pre-MG collides with the first MG and the first information includes the second information, the UE may perform the state transition on the Pre-MG after the MGL of the first MG.

In a case where the Pre-MG collides with the first MG and the first information includes the third information, the UE determines, based on priorities of MGs, whether to delay the state transition procedure of the Pre-MG until after the first MG. Herein, when the priority of the Pre-MG is lower than the priority of the first MG, the UE performs the state transition on the Pre-MG after the MGL of the first MG, and preferentially performs measurement within the first MG. When the priority of the Pre-MG is higher than the priority of the first MG, the UE performs the state transition of the Pre-MG, and preferentially performs measurement within the Pre-MG. It should be noted that in a case where the priority of the Pre-MG is the same as the priority of the first MG, the state transition may also be performed on the Pre-MG after the MGL of the first MG.

In a case where the Pre-MG collides with the first MG and the first information includes the fourth information, the UE determines, based on priorities of MGs, whether to drop the Pre-MG. Herein, when the priority of the Pre-MG is higher than the priority of the first MG, the UE drops the first MG and performs measurement within the Pre-MG. When the priority of the Pre-MG is lower than the priority of the first MG, the UE drops the Pre-MG and performs measurement within the first MG. It should be noted that in a case where the priority of the Pre-MG is the same as the priority of the first MG, the Pre-MG may be dropped, or the first MG may be dropped. Determining whether to drop the Pre-MG based on priorities of MGs is simple to implement. Specifically, the UE does not need to consider an impact of different states of the Pre-MG on the MG overlap problem, nor does it need to adopt different processing for different states of the Pre-MG. However, a throughput gain of the Pre-MG is lost. Of course, if the Pre-MG is in a deactivated state, it is equivalent to that no Pre-MG is configured, and no throughput loss happens.

In an embodiment, in order to resolve the collision between the state transition of the Pre-MG and the first MG, so as to determine the currently used measurement gap, in an embodiment, the performing the state transition on the Pre-MG after the MGL of the first MG includes: at a fifth time point, performing the Pre-MG activation or deactivation; wherein the fifth time point represents an ending point of the MGL of the first MG, or a time point located after the MGL of the first MG plus a sixth time period.

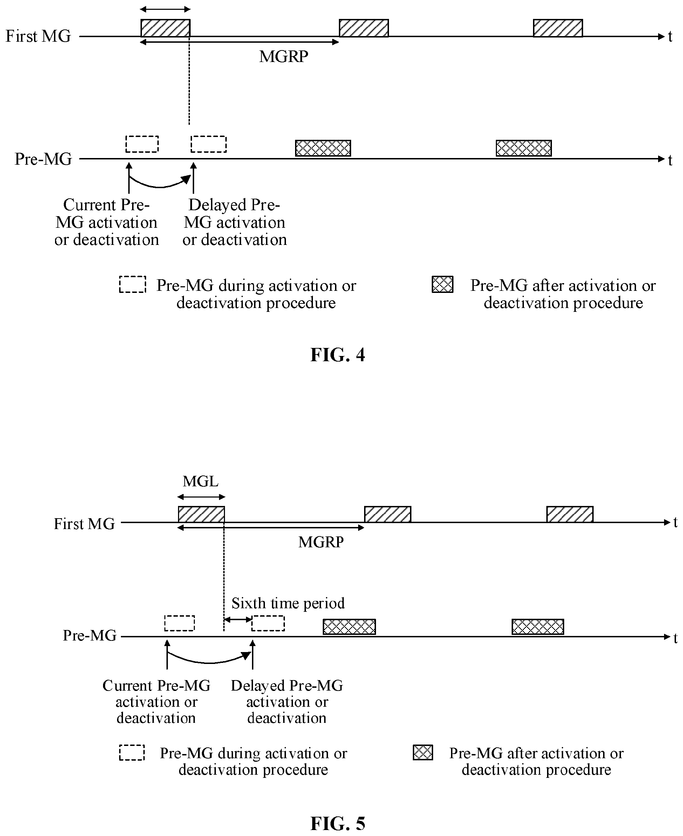

Here, the UE may delay the state transition procedure of the Pre-MG until after the MGL of the first MG, or until after the MGL of the first MG plus a sixth time period. For example, as shown in FIG. 4, the UE may perform activation or deactivation procedure of the Pre-MG at the ending moment of the MGL of the first MG. For another example, as shown in FIG. 5, the UE may perform activation or deactivation procedure of the Pre-MG at a time point after the MGL of the first MG plus a sixth time period.

It should be noted that the fifth time point may also be described as a fifth delay or a fifth duration, and the sixth time period may be described as a sixth duration.

In an embodiment, the method further includes: sending fifth information to a network device, wherein the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when the priority of the Pre-MG is lower than the priority of the first MG; whether the UE supports dropping the first MG having a priority lower than that of the Pre-MG; or whether the UE supports the collision between the state transition of the Pre-MG and the first MG.

Here, the fifth information may also be understood as UE capability information. In a case where the fifth information indicates that the UE supports delaying the state transition procedure of the Pre-MG until after the first MG, the first information may include the second information.

If the fifth information indicates that the UE supports delaying the state transition procedure of the Pre-MG until after the first MG when the priority of the Pre-MG is lower than the priority of the first MG, then the first information may include the third information.

In a case where the fifth information indicates that the UE supports dropping the first MG having a priority lower than that of the Pre-MG, the first information may include the fourth information.

The collision between the state transition of the Pre-MG and the first MG may also be described as: dynamic collision, i.e., the state transition of the Pre-MG dynamic collision with the first MG. Because the Pre-MG is in an activation/deactivation procedure and the state is uncertain, it is described as dynamic collision.

In an embodiment, the Pre-MG collides with the first MG, when at least one of following conditions is satisfied: the Pre-MG partially overlaps with the first MG in the time domain; the Pre-MG fully overlaps with the first MG in the time domain; a distance between the Pre-MG and the first MG is less than or equal to 4 ms.

Here, the Pre-MG colliding with the first MG is also applicable to a scenario where an activated Pre-MG collides with the first MG. An activated Pre-MG refers to a Pre-MG that has completed an activation procedure and is in an activated state and is effective.

In an embodiment, the distance between the Pre-MG and the first MG includes one of: a time difference between the ending point of the Pre-MG and the ending point of the first MG; a time difference between the ending point of the Pre-MG and the starting point of the first MG; a time difference between the starting point of the Pre-MG and the ending point of the first MG; or, a time difference between the starting point of the Pre-MG and the starting point of the first MG.

In an embodiment, the method further includes: dropping the first MG, when at least one of following conditions is satisfied: Pre-MG deactivation collides with the first MG; the priority of the Pre-MG is higher.

Here, dropping the first MG may also be described as: performing measurement within the Pre-MG, or described as dropping a measurement gap occasion, or described as dropping a measurement gap occasion. Pre-MG deactivation colliding with the first MG may also be described as: a deactivation procedure of the Pre-MG colliding with the first MG. Since it is the deactivation procedure colliding with the first MG, and a state of the Pre-MG before the deactivation procedure is activated, if a priority of the Pre-MG is higher, measurement may be preferentially performed within the Pre-MG during an ambiguous phase. Here, during the ambiguous phase, it cannot be determined whether the Pre-MG has been deactivated. The priority of the Pre-MG being higher may also be described as: the Pre-MG is configured with a higher priority, or described as the priority of the Pre-MG is higher than the priority of the first MG.

In an embodiment, the method further includes: performing measurement during the first MG, when at least one of following conditions is satisfied: Pre-MG activation collides with the first MG; the priority of the Pre-MG is lower; the priority of the Pre-MG is higher.

Here, dropping the first MG may also be described as: performing measurement within the Pre-MG. Pre-MG activation colliding with the first MG may also be described as: an activation procedure of the Pre-MG colliding with the first MG. Since it is the activation procedure colliding with the first MG, and a state of the Pre-MG before the activation procedure is deactivated, measurement may be preferentially performed during the first MG during an ambiguous phase regardless of whether the priority of the Pre-MG is higher or lower. Here, during the ambiguous phase, it cannot be determined whether the Pre-MG has been activated. The priority of the Pre-MG being lower may also be described as: the priority of the Pre-MG is lower than the priority of the first MG, or described as the priority of the first MG is higher.

On the basis that the state transition of the Pre-MG includes Pre-MG activation and/or deactivation, in an embodiment, the method further includes: performing measurement during the first MG, wherein the Pre-MG activation is delayed until a first time point, and the first time point is the ending point of the first MG plus 5 ms.

Here, that the Pre-MG activation is delayed until the first time point may be understood as: delaying an activation procedure of the Pre-MG until the first time point, and the first time point may be understood as a time instant. That the first time point is the ending point of the first MG plus 5 ms may be understood as: the first time point is 5 ms after the ending point of the first MG. That is to say, there is an interval of 5 ms between the first time point and the ending point of the first MG, and the first time point is after the ending point of the first MG. That the Pre-MG activation is delayed until the first time point, the first time point being the ending point of the first MG plus 5 ms, may also be described as the Pre-MG activation being delayed until 5 ms after the ending point of a measurement gap occasion.

An embodiment of the present disclosure further provides a measurement method, applied to a network device; the method including: Step 601: sending first information to a UE. Herein, the first information includes at least one of: second information, the second information is used for indicating the UE to delay the state transition procedure of the Pre-MG until after the first MG; third information, the third information is used for indicating the UE to determine, based on priorities of MGs, whether to delay the state transition procedure of the Pre-MG until after the first MG; fourth information, the fourth information is used for indicating the UE to determine, based on priorities of MGs, whether to drop the Pre-MG.

The network device may send the first information based on capability of the UE. Based on this, in an embodiment, before the sending the first information to the UE, the method further includes: receiving the fifth information sent by the UE.

Specifically, the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when a priority of the Pre-MG is lower than a priority of the first MG; whether the UE supports dropping the first MG having a priority lower than that of the Pre-MG; whether the UE supports the collision between the state transition of the Pre-MG and the first MG.

Here, in a case where the Pre-MG collides with the first MG, if the UE supports delaying the state transition procedure of the Pre-MG until after the first MG, then the first information does include the second information; if the UE does not support delaying the state transition procedure of the Pre-MG until after the first MG, then the first information does not include the second information.

In a case where the priority of the Pre-MG is lower than the priority of the first MG, if the UE supports delaying the state transition procedure of the Pre-MG until after the first MG, then the third information included in the first information is used for indicating the UE to determine, based on priorities of MGs, whether to delay the state transition procedure of the Pre-MG until after the first MG; if the UE does not support delaying the state transition procedure of the Pre-MG until after the first MG, then the first information does not include the third information.

In a case where the fifth information indicates that the UE supports dropping the first MG having a priority lower than that of the Pre-MG, the fourth information included in the first information is used for the UE to determine, based on priorities of MGs, whether to drop the Pre-MG; in a case where the fifth information indicates that the UE does not support dropping the first MG having a priority lower than that of the Pre-MG, the first information does include the fourth information.

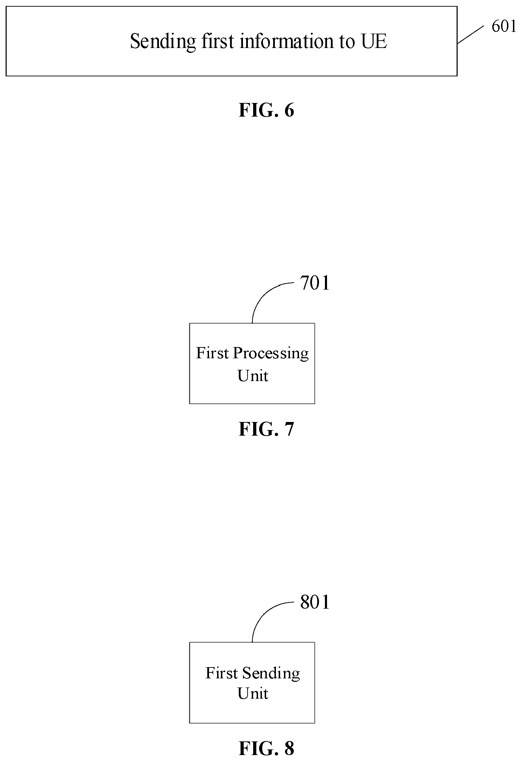

In order to implement the method on the UE side in the embodiments of the present application, an embodiment of the present application further provides a measurement apparatus, which is disposed on a UE. As shown in FIG. 7, the apparatus includes: a first processing unit 701, configured to, when a collision occurs between a Pre-MG and a first MG, perform at least one of following operations: applying a dropping rule; performing measurement within the first MG; dropping the first MG.

In an embodiment, the collision between the Pre-MG and the first MG includes a collision between a state transition of the Pre-MG and the first MG.

In an embodiment, the state transition of the Pre-MG is Pre-MG activation and/or deactivation. The collision between the state transition of the Pre-MG and the first MG includes that: a collision occurs between a Pre-MG activation procedure and the first MG, and/or, a collision occurs between a Pre-MG deactivation procedure and the first MG.

In an embodiment, the state transition of the Pre-MG collides with the first MG, when at least one of following conditions is satisfied: the state transition of the Pre-MG occurs within a first time period before the starting point of the first MG; the state transition of the Pre-MG occurs within a second time period after the ending point of the first MG; the state transition of the Pre-MG occurs within the first MG; a distance between the state transition of the Pre-MG and the first MG is less than or equal to 4 ms; the ending point of the state transition of the Pre-MG occurs within a first time period starting 4 ms before the starting point of the first MG, and ending 4 ms after the ending point of the first MG.

In an embodiment, the first processing unit 701 is specifically configured to perform measurement within the first MG in a first time range; wherein the first time range includes at least one of: the first time period before the starting point of the first MG; the second time period after the ending point of the first MG; within the first MG.

In an embodiment, the first processing unit 701 is specifically configured to apply the dropping rule after the first MG or after the first MG plus a third time period.

In an embodiment, a state of the Pre-MG takes effect after the first MG plus the third time period.

In an embodiment, an activation time and/or a deactivation time of the Pre-MG is a fourth time period.

In an embodiment, the first processing unit 701 is further configured to, when the Pre-MG collides with the first MG, delay the state transition of the Pre-MG; or, when a time distance between a to-be-activated Pre-MG and the first MG is less than or equal to 5 ms, drop the Pre-MG, wherein the dropped Pre-MG is a first Pre-MG after an activation procedure of the Pre-MG.

In an embodiment, the apparatus further includes: an obtaining unit, configured to obtain first information, wherein the first information includes at least one of: second information, used for indicating the UE to delay the state transition procedure of the Pre-MG until after the first MG; third information, used for indicating the UE to determine, based on priorities of MGs, whether to delay the state transition procedure of the Pre-MG until after the first MG; fourth information, used for indicating the UE to determine, based on priorities of MGs, whether to drop the Pre-MG.

In an embodiment, the apparatus further includes: a second processing unit, configured to perform at least one of following operations: after a MGL of the first MG, performing the state transition on the Pre-MG; when a priority of the Pre-MG is higher than a priority of the first MG, dropping the first MG; when the priority of the Pre-MG is lower than the priority of the first MG, performing the state transition on the Pre-MG after the MGL of the first MG; when the priority of the Pre-MG is lower than the priority of the first MG, performing measurement within the first MG; when the priority of the Pre-MG is higher than the priority of the first MG, performing the state transition of the Pre-MG.

In an embodiment, the second processing unit is specifically configured to, at a fifth time point, perform the Pre-MG activation or deactivation; wherein, the fifth time point represents the ending point of the MGL of the first MG, or a time point obtained from the MGL of the first MG plus a sixth time period.

In an embodiment, the apparatus further includes: a second sending unit, configured to send fifth information to a network device, wherein the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when the priority of the Pre-MG is lower than the priority of the first MG; whether the UE supports dropping the first MG having a priority lower than that of the Pre-MG; whether the UE supports the collision between the state transition of the Pre-MG and the first MG.

In an embodiment, the Pre-MG collides with the first MG, when at least one of following conditions is satisfied: the Pre-MG partially overlaps with the first MG in time domain; the Pre-MG fully overlaps with the first MG in time domain; a distance between the Pre-MG and the first MG is less than or equal to 4 ms.

In an embodiment, the distance between the Pre-MG and the first MG includes one of: a time difference between the ending point of the Pre-MG and the ending point of the first MG; a time difference between the ending point of the Pre-MG and the starting point of the first MG; a time difference between the starting point of the Pre-MG and the ending point of the first MG; or, a time difference between the starting point of the Pre-MG and the starting point of the first MG.

In an embodiment, the first processing unit 701 is further configured to drop the first MG when at least one of following conditions is satisfied: Pre-MG deactivation collides with the first MG; the priority of the Pre-MG is higher.

In an embodiment, the first processing unit 701 is further configured to perform measurement within the first MG when at least one of following conditions is satisfied: Pre-MG activation collides with the first MG; the priority of the Pre-MG is lower; the priority of the Pre-MG is higher.

In an embodiment, the first processing unit 701 is further configured to perform measurement within the first MG, and the Pre-MG activation is delayed until a first time point, wherein the first time point is 5 ms after the ending point of the first MG.

In practical application, the first processing unit 701 and the second processing unit may be implemented by a processor in the measurement apparatus, and the second sending unit and the obtaining unit may be implemented by the processor in the measurement apparatus in combination with a communication interface.

In order to implement the method on the network device side in the embodiments of the present application, an embodiment of the present application further provides a measurement apparatus, which is disposed on a network device. As shown in FIG. 8, the apparatus includes: a first sending unit 801, configured to send first information to a UE, wherein the first information includes at least one of: second information, used for indicating the UE to delay a state transition procedure of a Pre-MG until after a first MG; third information, used for indicating the UE to determine, based on priorities of MGs, whether to delay the state transition procedure of the Pre-MG until after the first MG; fourth information, used for indicating the UE to determine, based on priorities of MGs, whether to drop the Pre-MG.

In an embodiment, the apparatus further includes: a receiving unit, configured to receive fifth information sent by the UE, wherein the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when a priority of the Pre-MG is lower than a priority of the first MG; whether the UE supports dropping the first MG having a priority lower than that of the Pre-MG; whether the UE supports the collision between the state transition of the Pre-MG and the first MG.

In practical application, the first sending unit 801 and the receiving unit may be implemented by a processor in the measurement apparatus in combination with a communication interface.

It should be noted that when the measurement apparatus provided in the above embodiments performs measurement, only the division of the above functional modules is used as an example for illustration. In practical applications, the above processing may be allocated to different functional modules as required, that is, the internal structure of the apparatus is divided into different functional modules to complete all or part of the processing described above. In addition, the measurement apparatus provided in the above embodiments belongs to the same concept as the measurement method embodiments. For the specific implementation process thereof, reference may be made to the method embodiments, and details are not described herein again.

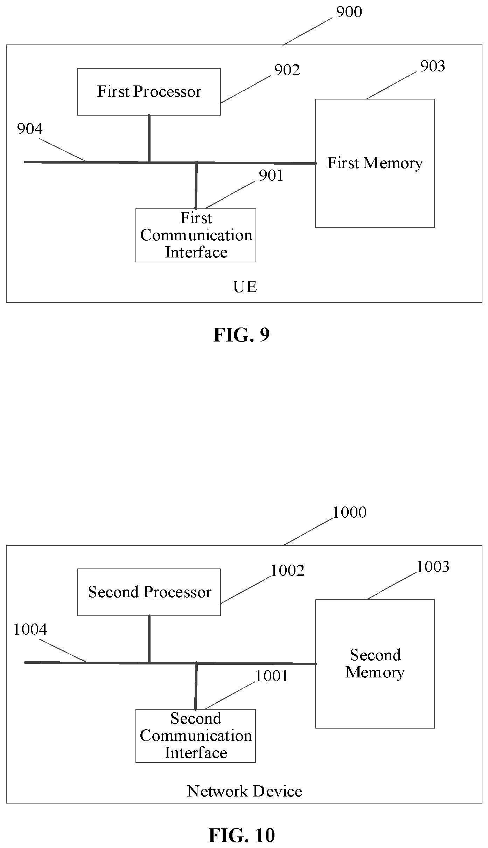

Based on the hardware implementation of the program modules described above, and in order to implement the method on the UE side in the embodiments of the present application, an embodiment of the present application further provides a UE. As shown in FIG. 9, the UE 900 includes: a first communication interface 901, capable of performing information interaction with other network nodes; a first processor 902, connected to the first communication interface 901 to implement information interaction with other network nodes, and configured to, when running a computer program, execute the method provided by one or more technical solutions on the UE side described above. The computer program is stored on a first memory 903.

Specifically, the first processor 902 is configured to, when a collision occurs between a Pre-MG and a first MG, perform at least one of following operations: applying a dropping rule; performing measurement within the first MG; dropping the first MG.

In an embodiment, the collision between the Pre-MG and the first MG includes a collision between a state transition of the Pre-MG and the first MG.

In an embodiment, the state transition of the Pre-MG is Pre-MG activation and/or deactivation.

In an embodiment, the state transition of the Pre-MG collides with the first MG, when at least one of following conditions is satisfied: the state transition of the Pre-MG occurs within a first time period before the starting point of the first MG; the state transition of the Pre-MG occurs within a second time period after the ending point of the first MG; the state transition of the Pre-MG occurs within the first MG; a distance between the state transition of the Pre-MG and the first MG is less than or equal to 4 ms; the ending point of the state transition of the Pre-MG occurs within a first time period starting 4 ms before the starting point of the first MG, and ending 4 ms after the ending point of the first MG.

In an embodiment, the first processor 902 is specifically configured to perform measurement within the first MG in a first time range; wherein the first time range includes at least one of: the first time period before the starting point of the first MG; the second time period after the ending point of the first MG; within the first MG.

In an embodiment, the first processor 902 is specifically configured to apply the dropping rule after the first MG or after the first MG plus a third time period.

In an embodiment, a state of the Pre-MG takes effect after the first MG plus the third time period.

In an embodiment, an activation time and/or a deactivation time of the Pre-MG is a fourth time period.

In an embodiment, the first processor 902 is further configured to, when the Pre-MG collides with the first MG, delay the state transition of the Pre-MG; or, when a time distance between a to-be-activated Pre-MG and the first MG is less than or equal to 5 ms, drop the Pre-MG, wherein the dropped Pre-MG is a first Pre-MG after an activation procedure of the Pre-MG.

In an embodiment, the first processor 902 is further configured to obtain first information, wherein the first information includes at least one of: second information, used for indicating the UE to delay the state transition procedure of the Pre-MG until after the first MG; third information, used for indicating the UE to determine, based on priorities of MGs, whether to delay the state transition procedure of the Pre-MG until after the first MG; fourth information, used for indicating the UE to determine, based on priorities of MGs, whether to drop the Pre-MG.

In an embodiment, the first processor 902 is further configured to perform at least one of following operations: after a MGL of the first MG, performing the state transition on the Pre-MG; when a priority of the Pre-MG is higher than a priority of the first MG, dropping the first MG; when the priority of the Pre-MG is lower than the priority of the first MG, performing the state transition on the Pre-MG after the MGL of the first MG; when the priority of the Pre-MG is lower than the priority of the first MG, performing measurement within the first MG; when the priority of the Pre-MG is higher than the priority of the first MG, performing the state transition of the Pre-MG.

In an embodiment, the first processor 902 is specifically configured to, at a fifth time point, perform the Pre-MG activation or deactivation; wherein, the fifth time point represents the ending point of the MGL of the first MG, or a time point obtained from the MGL of the first MG plus a sixth time period.

In an embodiment, the first communication interface 901 is configured to send fifth information to a network device, wherein the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when the priority of the Pre-MG is lower than the priority of the first MG; whether the UE supports dropping the first MG having a priority lower than that of the Pre-MG; whether the UE supports the collision between the state transition of the Pre-MG and the first MG.

In an embodiment, the Pre-MG collides with the first MG, when at least one of following conditions is satisfied: the Pre-MG partially overlaps with the first MG in time domain; the Pre-MG fully overlaps with the first MG in time domain; a distance between the Pre-MG and the first MG is less than or equal to 4 ms.

In an embodiment, the distance between the Pre-MG and the first MG includes one of: a time difference between the ending point of the Pre-MG and the ending point of the first MG; a time difference between the ending point of the Pre-MG and the starting point of the first MG; a time difference between the starting point of the Pre-MG and the ending point of the first MG; or, a time difference between the starting point of the Pre-MG and the starting point of the first MG.

In an embodiment, the first processor 902 is further configured to drop the first MG when at least one of following conditions is satisfied: Pre-MG deactivation collides with the first MG; the priority of the Pre-MG is higher.

In an embodiment, the first processor 902 is further configured to perform measurement within the first MG when at least one of following conditions is satisfied: Pre-MG activation collides with the first MG; the priority of the Pre-MG is lower; the priority of the Pre-MG is higher.

In an embodiment, the first processor 902 is further configured to perform measurement within the first MG, and the Pre-MG activation is delayed until a first time point, wherein the first time point is 5 ms after the ending point of the first MG.

It should be noted that: the specific processing procedures of the first processor 902 and the first communication interface 901 may be understood with reference to the above methods.

Of course, in practical application, various components in the UE 900 are coupled together through a bus system 904. It may be understood that the bus system 904 is used to implement connection and communication among these components. In addition to a data bus, the bus system 904 also includes a power bus, a control bus, and a status signal bus. However, for the sake of clear illustration, various buses are all labeled as the bus system 904 in FIG. 9.

The first memory 903 in the embodiments of the present application is used to store various types of data to support the operation of the UE 900. Examples of such data include: any computer program used to operate on the UE 900.

The methods disclosed in the above embodiments of the present application may be applied to the first processor 902 or implemented by the first processor 902. The first processor 902 may be an integrated circuit chip with signal processing capability. In an implementation process, various steps of the above methods may be completed by integrated logic circuits of hardware or instructions in a software form in the first processor 902. The first processor 902 described above may be a general-purpose processor, a Digital Signal Processor (DSP), or other programmable logic devices, discrete gate or transistor logic devices, discrete hardware components, etc. The first processor 902 may implement or execute the methods, steps, and logic block diagrams disclosed in the embodiments of the present application. The general-purpose processor may be a microprocessor or any conventional processor, etc. The steps of the methods disclosed in combination with the embodiments of the present application may be directly embodied as being executed and completed by a hardware decoding processor, or executed and completed by a combination of hardware and software modules in a decoding processor. The software modules may be located in a storage medium, and the storage medium is located in the first memory 903. The first processor 902 reads information in the first memory 903 and completes the steps of the aforementioned methods in combination with its hardware.

In an exemplary embodiment, the UE 900 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic elements, for executing the aforementioned methods.

Based on the hardware implementation of the program modules described above, and in order to implement the method on the network device side in the embodiments of the present application, an embodiment of the present application further provides a network device. As shown in FIG. 10, the network device 1000 includes: a second communication interface 1001, capable of performing information interaction with other network nodes; a second processor 1002, connected to the second communication interface 1001 to implement information interaction with other network nodes, and configured to, when running a computer program, execute the method provided by one or more technical solutions on the network device side described above. The computer program is stored on a second memory 1003.

Specifically, the second communication interface 1001 is configured to send first information to a UE, wherein the first information includes at least one of: second information, used for indicating the UE to delay a state transition procedure of a Pre-MG until after a first MG; third information, used for indicating the UE to determine, based on priorities of MGs, whether to delay the state transition procedure of the Pre-MG until after the first MG; fourth information, used for indicating the UE to determine, based on priorities of MGs, whether to drop the Pre-MG.

In an embodiment, the second communication interface 1001 is further configured to receive fifth information sent by the UE, wherein the fifth information is used for indicating at least one of: whether the UE supports delaying the state transition procedure of the Pre-MG until after the first MG, when the Pre-MG collides with the first MG; whether the UE supports delaying the state transition procedure of the Pre-MG until after the first MG, when a priority of the Pre-MG is lower than a priority of the first MG; whether the UE supports dropping the first MG having a priority lower than that of the Pre-MG; whether the UE supports the collision between the state transition of the Pre-MG and the first MG.

It should be noted that: the specific processing procedures of the second processor 1002 and the second communication interface 1001 may be understood with reference to the above methods.

Of course, in practical application, various components in the network device 1000 are coupled together through a bus system 1004. It may be understood that the bus system 1004 is used to implement connection and communication among these components. In addition to a data bus, the bus system 1004 also includes a power bus, a control bus, and a status signal bus. However, for the sake of clear illustration, various buses are all labeled as the bus system 1004 in FIG. 10.

The second memory 1003 in the embodiments of the present application is used to store various types of data to support the operation of the network device 1000. Examples of such data include: any computer program used to operate on the network device 1000.

The methods disclosed in the above embodiments of the present application may be applied to the second processor 1002 or implemented by the second processor 1002. The second processor 1002 may be an integrated circuit chip with signal processing capability. In an implementation process, various steps of the above methods may be completed by integrated logic circuits of hardware or instructions in a software form in the second processor 1002. The second processor 1002 described above may be a general-purpose processor, a DSP, or other programmable logic devices, discrete gate or transistor logic devices, discrete hardware components, etc. The second processor 1002 may implement or execute the methods, steps, and logic block diagrams disclosed in the embodiments of the present application. The general-purpose processor may be a microprocessor or any conventional processor, etc. The steps of the methods disclosed in combination with the embodiments of the present application may be directly embodied as being executed and completed by a hardware decoding processor, or executed and completed by a combination of hardware and software modules in a decoding processor. The software modules may be located in a storage medium, and the storage medium is located in the second memory 1003. The second processor 1002 reads information in the second memory 1003 and completes the steps of the aforementioned methods in combination with its hardware.

In an exemplary embodiment, the network device 1000 may be implemented by one or more ASICs, DSPs, PLDs, CPLDs, FPGAs, general-purpose processors, controllers, MCUs, microprocessors, or other electronic elements, for executing the aforementioned methods.

It may be understood that the memory (the first memory 903 and the second memory 1003) in the embodiments of the present application may be a volatile memory or a non-volatile memory, or may include both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disc, or a Compact Disc Read-Only Memory (CD-ROM); the magnetic surface memory may be a magnetic disk memory or a magnetic tape memory. The volatile memory may be a Random Access Memory (RAM), which serves as an external high-speed cache. By way of exemplary but not restrictive illustration, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiments of the present application is intended to include, but is not limited to, these and any other suitable types of memories.

In an exemplary embodiment, an embodiment of the present application further provides a storage medium, i.e., a computer storage medium, specifically a computer-readable storage medium, including, for example, the first memory 903 storing a computer program, wherein the computer program may be executed by the first processor 902 of the UE 900 to complete the steps of the aforementioned UE side method. For another example, the storage medium includes the second memory 1003 storing a computer program, wherein the computer program may be executed by the second processor 1002 of the network device 1000 to complete the steps of the aforementioned network device side method. The computer-readable storage medium may be a memory such as a FRAM, a ROM, a PROM, an EPROM, an EEPROM, a Flash Memory, a magnetic surface memory, an optical disc, or a CD-ROM.

It should be noted that: "first", "second", etc. are used to distinguish similar objects and are not necessarily used to describe a specific order or sequence.

In addition, the technical solutions described in the embodiments of the present application may be combined arbitrarily without conflict.

The above descriptions are only preferred embodiments of the present application, and are not intended to limit the protection scope of the present application.

## Claims

1. A measurement method, wherein the method is applied to a User Equipment (UE), the method comprising:
when a collision occurs between a pre-configured measurement gap (Pre-MG) and a first measurement gap (MG), performing at least one of following operations:
applying a dropping rule;
performing measurement within the first MG;
dropping the first MG.

2. The method according to claim 1, wherein the collision between the Pre-MG and the first MG includes a collision between a state transition of the Pre-MG and the first MG.

3. The method according to claim 2, wherein the state transition of the Pre-MG is Pre-MG activation and/or deactivation.

4. The method according to claim 2 or 3, wherein the state transition of the Pre-MG collides with the first MG, when at least one of following conditions is satisfied:
the state transition of the Pre-MG occurs within a first time period before the starting point of the first MG;
the state transition of the Pre-MG occurs within a second time period after the ending point of the first MG;
the state transition of the Pre-MG occurs within the first MG;
a distance between the state transition of the Pre-MG and the first MG is less than or equal to 4 milliseconds (ms);
the ending point of the state transition of the Pre-MG occurs within a first time period starting 4 ms before the starting point of the first MG, and ending 4 ms after the ending point of the first MG.

5. The method according to any one of claims 1 to 4, wherein the performing measurement(s) within the first MG comprises:
performing measurement(s) within the first MG in a first time range;
wherein the first time range comprises at least one of:
a first time period before the starting point of the first MG;
a second time period after the ending point of the first MG;
within the first MG.

6. The method according to any one of claims 1 to 5, wherein the applying the dropping rule comprises:
applying the dropping rule after the first MG or after the first MG plus a third time period.

7. The method according to any one of claims 1 to 6, wherein a state of the Pre-MG takes effect after the first MG plus the third time period.

8. The method according to any one of claims 1 to 7, wherein an activation time and/or a deactivation time of the Pre-MG is a fourth time period.

9. The method according to any one of claims 1 to 8, further comprising:
when the Pre-MG collides with the first MG, delaying the state transition of the Pre-MG; or,
when a time distance between a to-be-activated Pre-MG and the first MG is less than or equal to 5 ms, dropping a first Pre-MG, wherein the dropped first Pre-MG is a first Pre-MG after an activation procedure of the to-be-activated Pre-MG.

10. The method according to any one of claims 1 to 9, further comprising:
obtaining first information, wherein the first information comprises at least one of:
second information, used for indicating the UE to delay the state transition procedure of the Pre-MG until after the first MG;
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

11. The method according to claim 10, wherein the method further comprises performing at least one of following operations:
after a measurement gap length (MGL) of the first MG, performing the state transition on the Pre-MG;
when a priority of the Pre-MG is higher than a priority of the first MG, dropping the first MG;
when the priority of the Pre-MG is lower than the priority of the first MG, performing the state transition on the Pre-MG after the MGL of the first MG;
when the priority of the Pre-MG is lower than the priority of the first MG, performing measurement(s) within the first MG;
when the priority of the Pre-MG is higher than the priority of the first MG, performing the state transition of the Pre-MG.

12. The method according to claim 11, wherein the performing the state transition on the Pre-MG after the MGL of the first MG comprises:
at a fifth time point, performing the Pre-MG activation or deactivation;
wherein the fifth time point represents the ending point of the MGL of the first MG, or a time point obtained from the MGL of the first MG plus a sixth time period.

13. The method according to any one of claims 1 to 12, further comprising:
sending fifth information to a network device, wherein the fifth information is used for indicating at least one of:
whether the UE supports delaying the state transition procedure of the Pre-MG until after the first MG, when the Pre-MG collides with the first MG;
whether the UE supports delaying the state transition procedure of the Pre-MG until after the first MG, when the priority of the Pre-MG is lower than the priority of the first MG;
whether the UE supports dropping the first MG having a priority lower than that of the Pre-MG;
whether the UE supports the collision between the state transition of the Pre-MG and the first MG.

14. The method according to any one of claims 1 to 13, wherein the Pre-MG collides with the first MG, when at least one of following conditions is satisfied:
the Pre-MG partially overlaps with the first MG in time domain;
the Pre-MG fully overlaps with the first MG in time domain;
a distance between the Pre-MG and the first MG is less than or equal to 4 ms.

15. The method according to claim 14, wherein the distance between the Pre-MG and the first MG comprises one of:
a time difference between the ending point of the Pre-MG and the ending point of the first MG;
a time difference between the ending point of the Pre-MG and the starting point of the first MG;
a time difference between the starting point of the Pre-MG and the ending point of the first MG; or,
a time difference between the starting point of the Pre-MG and the starting point of the first MG.

16. The method according to any one of claims 1 to 15, further comprising:
dropping the first MG, when at least one of following conditions is satisfied:
Pre-MG deactivation collides with the first MG;
the priority of the Pre-MG is higher.

17. The method according to any one of claims 1 to 16, further comprising:
performing measurement during the first MG, when at least one of following conditions is satisfied:
Pre-MG activation collides with the first MG;
the priority of the Pre-MG is lower;
the priority of the Pre-MG is higher.

18. The method according to claim 3, further comprising:
performing measurement during the first MG, and the Pre-MG activation is delayed until a first time point, wherein the first time point is 5 ms after the ending point of the first MG.

19. A measurement method, wherein the method is applied to a network device, the method comprising:
sending first information to a User Equipment (UE), wherein the first information comprises at least one of:
second information, used for indicating the UE to delay a state transition procedure of a pre-configured measurement gap (Pre-MG) until after a first measurement gap (MG);
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

20. The method according to claim 19, wherein before the sending first information to the UE, the method further comprises:
receiving fifth information sent by the UE, wherein the fifth information is used for indicating at least one of:
whether the UE supports delaying the state transition procedure of the Pre-MG until after the first MG, when the Pre-MG collides with the first MG;
whether the UE supports delaying the state transition procedure of the Pre-MG until after the first MG, when the priority of the Pre-MG is lower than the priority of the first MG;
whether the UE supports dropping the first MG having a priority lower than that of the Pre-MG;
whether the UE supports the collision between the state transition of the Pre-MG and the first MG.

21. A measurement apparatus, comprising:
a first processing unit, configured to, when a collision occurs between a pre-configured measurement gap (Pre-MG) and a first measurement gap (MG), perform at least one of following operations:
applying a dropping rule;
performing measurement within the first MG;
dropping the first MG.

22. A measurement apparatus, comprising:
a first sending unit, configured to send first information to a User Equipment (UE), wherein the first information comprises at least one of:
second information, used for indicating the UE to delay a state transition procedure of a pre-configured measurement gap (Pre-MG) until after a first measurement gap (MG);
third information, used for indicating the UE to determine, based on priorities of MGs, whether to delay the state transition procedure of the Pre-MG until after the first MG; and
fourth information, used for indicating the UE to determine, based on priorities of MGs, whether to drop the Pre-MG.

23. A User Equipment (UE), wherein the UE comprises a first processor and a first communication interface, wherein:
the first communication interface is configured to, when a collision occurs between a pre-configured measurement gap (Pre-MG) and a first measurement gap (MG), perform at least one of following operations:
applying a dropping rule;
performing measurement within the first MG;
dropping the first MG.

24. A network device, wherein the network device comprises a second processor and a second communication interface, wherein:
the second communication interface is configured to send first information to a User Equipment (UE), wherein the first information comprises at least one of:
second information, used for indicating the UE to delay a state transition procedure of a pre-configured measurement gap (Pre-MG) until after a first measurement gap (MG);
third information, used for indicating the UE to determine, based on priorities of MGs, whether to delay the state transition procedure of the Pre-MG until after the first MG;
fourth information, used for indicating the UE to determine, based on priorities of MGs, whether to drop the Pre-MG.

25. A User Equipment (UE), wherein the UE comprises a first processor and a first memory for storing a computer program capable of running on the first processor; wherein the first processor is configured to, when running the computer program, execute steps of the method according to any one of claims 1 to 18.

26. A network device, wherein the network device comprises a second processor and a second memory for storing a computer program capable of running on the second processor,
wherein the second processor is configured to, when running the computer program, execute steps of the method according to claim 19 or 20.

27. A storage medium, having a computer program stored thereon, wherein when the computer program is executed by a processor, steps of the method according to any one of claims 1 to 18 are implemented, or steps of the method according to claim 19 or 20 are implemented.
